Europäisches Patentamt

European Patent Office

Office européen des brevets

(19)

(11) Veröffentlichungsnummer : **0 139 821**
**B1**

(12) **EUROPÄISCHE PATENTSCHRIFT**

(45) Veröffentlichungstag der Patentschrift :
23.11.89

(21) Anmeldenummer : 84104994.3

(22) Anmeldetag : 03.05.84

(51) Int. Cl.⁴ : **A 01 D 43/10**

(54) **Futteraufbereitungsmaschine.**

(30) Priorität : 15.08.83 CH 4433/83

(43) Veröffentlichungstag der Anmeldung :
08.05.85 Patentblatt 85/19

(45) Bekanntmachung des Hinweises auf die Patenterteilung : 23.11.89 Patentblatt 89/47

(84) Benannte Vertragsstaaten :
**AT BE DE FR GB IT NL**

(56) Entgegenhaltungen :
**EP--A-- 0 061 230**
**EP--A-- 0 076 686**
**DE--A-- 2 004 285**
**FR--A-- 2 107 042**
**FR--A-- 2 111 471**
**GB--A-- 2 089 635**

(73) Patentinhaber : **BUCHER-GUYER AG Maschinenfabrik**

**CH-8166 Niederweningen/Zürich (CH)**

(72) Erfinder : **Amstutz, Jean-Pierre**
**Bachtalenstrasse 398**
**CH-5442 Birr (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Aufbereitungsmaschine für landwirtschaftliches Halmgut, bestehend aus einem rotierend antreibbaren, mit förderwirksamen Aufbereitungswerkzeugen ausgebildeten Förderorgan und einem mit diesem einen Förderkanal bildenden Führungsorgan. Solche Einrichtungen haben sich bei der Heuernte und Silofutteraufbereitung bewährt. Sie verkürzen durch einen beschleunigten Trocknungsprozess die Erntezeit erheblich und ermöglichen den Landwirten eine rationellere Arbeitsweise.

Es sind verschiedene Konstruktionen auf der Basis einer mittels Fördertrommel und im Abstand darüber angeordneten Führungsorgan gebildeten Aufbereitungseinrichtungen bekannt.

Nach DE-A-20 04 285 ist der aus Fördertrommel und Führungsorgan ausgestaltete Förderkanal mit Schikanen versehen, die an dem Führungsorgan starr befestigt und quer zum Förderfluss des Halmgutes verlaufend, im Förderkanal angeordnet sind.

Das mittels Fördertrommel durch den Förderkanal strömende Halmgut wird an diesen Schikanen schockartig verletzt.

Bei einer Mähaufbereitungseinrichtung nach der DE-A-21 47 375 ist das Führungsorgan im Bereich der Förderkanaleintrittsöffnung verstell- und feststellbar ausgebildet. Die Intensität zur Aufbereitung des Halmgutes erfolgt eingangs des Förderkanals aufgrund seines wahlweise einstellbaren Oeffnungsquerschnittes und der Lage der Eintrittskante am Führungsorgan.

Die DE-B-21 31 134 beschreibt eine alternative Ausführungsform einer Schikane, die sich in der Praxis als vorteilhaft erwiesen hat. Das Führungsorgan über der Fördertrommel ist mit einem kammähnlichen Rechen versehen, der sich über die ganze Breite der Fördertrommel erstreckt und aufgrund seiner Verstellbarkeit den Querschnitt des Förderkanals wahlweise verändern lässt, soweit, dass die Zinken zwischen die Förderorgane der Fördertrommel ragen können.

Mit dieser Konstruktion ist es möglich, das Mass der Verletzung dem Futtervorkommen anzupasen.

Dennoch hat es sich gezeigt, dass durch die hohe Schlagwirkung dieser bekannten Einrichtungen sich in hohem Masse nur partielle Verletzungen am Futter erzielen lassen und ein Verlust infolge Abschlagen der Blattteile nicht vermeidbar ist. Dieser Uebelstand wird nicht nur durch die Ausbildung und das Zusammenwirken von Fördertrommel und Schikane erzeugt, sondern auch noch durch die relativ grosse Umlaufgeschwindigkeit der Fördertrommel.

Alternativ vermittelt die DE-A-30 48 569 eine Konditioniereinrichtung, bei der die Aufbereitung des Halmgutes mittels eines mit einer Bürstenanordnung besetzten Rotors erfolgt. Ueber die Spitzen der Borsten dieser Bürsten stehen Förderzinken radial nach aussen vor. Letztere sind zur Aufnahme des geschnittenen Halmgutes vom Boden oder von einem Mähwerk vorgesehen und transportieren es in den Förderkanal. Danach treten die Förderzinken aus dem Förderkanal aus, damit die Bürsten in Zusammenwirkung mit der Leitwand eine Konditionierung auf das Halmgut ausüben können.

Diese Aufbereitungsart hinterlässt u. a. relaiv hohe Bröckelverluste und erfordert eine hohe Antriebsleistung.

Erfindungsgemäss wird diese Aufgabe dadurch gelöst, dass das mit einem die Drehachse des Förderorgans trommelförmig umgebenden Leitorgan einen Förderkanal bildende Führungsorgan mit schlitzartigen Ausnehmungen ausgebildet ist, derart, dass die Umlaufbahnen der Aufbereitungswerkzeuge das Führungsorgan an dem vorderen und dem hinteren Ende des Förderkanals schneiden.

Durch diese Ausführungsform kann das geschnittene Futter schonender als bisher aufbereitet werden, insbesondere auf das zarte Blattgut der Halme wirkt sich diese Vorgehensweise günstig aus.

Es entsteht anstelle der vornehmlich schlagenden Wirkung vermehrt Reibungswiderstand im Förderkanal, wodurch die Schutzschicht des Futters einer vermehrt schürfenden Verletzung ausgesetzt wird.

Die Bröckelverluste werden dadurch gemindert. Auch die Drehzahl des Förderorgans kann soweit reduziert werden, dass nunmehr die Aufnahmefähigkeit des Futters erhalten bleibt.

Vorzugsweise bilden am vorderen Ende des Förderkanals die Tangenten an die Umlaufbahnen der Förderwerkzeuge mit dem Führungsorgan einen spitzen Winkel α, sodass ein stetiger Futterstrom gewahrt bleibt.

Es erweist sich als besonders vorteilhaft, wenn der Aufbereitungsmaschine ein Mähwerk vorgeschaltet ist, wodurch ein Arbeitsdurchgang erspart werden kann. Als Mähwerke eignen sich die bekannten Ausführungen, wie Trommel-, Scheiben-, Band- und Fingermäher.

Zur Erhöhung der Verletzungswirkung können die Aufbereitungswerkzeuge an ihrer förderwirksamen Seite mit einer rauhen, das Halmgut verletzende Oberfläche versehen sein.

Besonders günstig wirkt sich die Massnahme aus, wenn die Aufbereitungswerkzeuge mit nach aussen sich verjüngenden Flanken versehen sind. Jeweils zwei benachbarte Aufbereitungswerkzeuge bilden dadurch einen keilförmigen Spalt, der beim Durchströmen des sich verengenden Förderkanals auf das Futter eine verstärkte allseitige Reibungswirkung ausübt.

Es ist besonders vorteilhaft, wenn die Flanken eine rauhe Oberfläche aufweisen, sodass das Halmgut beim Durchströmen des Förderkanals, durch dessen sich zusehends verengenden Querschnitt, einer zunehmenden Reibung ausgesetzt ist.

Als vorzüglich erweist sich, wenn die die Aus-

nehmungen bildenden Leisten mit Verstärkungs-rippen versehen sind, die die durch den sich verengenden Förderkanal auftretende höhere Belastung aufnehmen können.

Besonders günstig stellt sich heraus, wenn das Führungsorgan zur wahlweisen Aenderung der Förderkanalhöhe verstellbar angeordnet ist. Durch diese Möglichkeit kann die Aufbereitung an die Futterbeschaffenheit angepasst werden.

Zu Montage- und Demontagezwecken ist es vorteilhaft, wenn das Führungsorgan abnehmbar befestigt ist.

Alternativ kann es scharnierend angeordnet sein.

Es erweist sich als Vorteil, wenn das Führungsorgan mit einer die Ausnehmungen abdeckenden Haube versehen ist, womit die Unfallgefahr weitgehend vermieden werden kann.

Damit sich das durch die Ausnehmungen des Führungsorgans durchdringende Futter nicht unter der Haube ansammelt, kann letztere an ihrem hinteren Ende mit einer Austrittsöffnung versehen sein.

Vorteilhafterweise kann zwischen den Aufbereitungswerkzeugen des Förderorgans jeweils ein in den Förderkanal ragender Mitnehmer vorgesehen sein, der die Futteraufnahme und den Weitertransport begünstigt.

Es erweist sich als vorzüglich, wenn die Aufbereitungswerkzeuge am Mantel einer Leittrommel befestigt sind.

Nachfolgend wird die Erfindung anhand mehrerer in der Zeichnung dargestellter Ausführungsbeispiele erläutert. Es zeigen :

Fig. 1 einen Längsschnitt durch die Maschine mit einem Scheibenmähwerk,

Fig. 2 eine ausschnittweise Draufsicht auf die Maschine gemäss Fig. 1,

Fig. 3 einen Längsschnitt durch die Maschine mit einem Trommelmähwerk,

Fig. 4 eine Draufsicht auf einen Mähaufbereiter mit Trommelmähwerk und einer um eine vertikale Achse rotierenden Aufbereitungsmaschine,

Fig. 5 einen Mähaufbereiter mit unterschlächtigem Förderkanal,

Fig. 6 einen Querschnitt durch die Maschine zur Darstellung der Aufbereitungswerkzeuge im Förderkanal,

Fig. 7 einen Querschnitt durch die Maschine wie in Fig. 6 mit einer alternativen Ausgestaltungsform der Aufbereitungswerkzeuge.

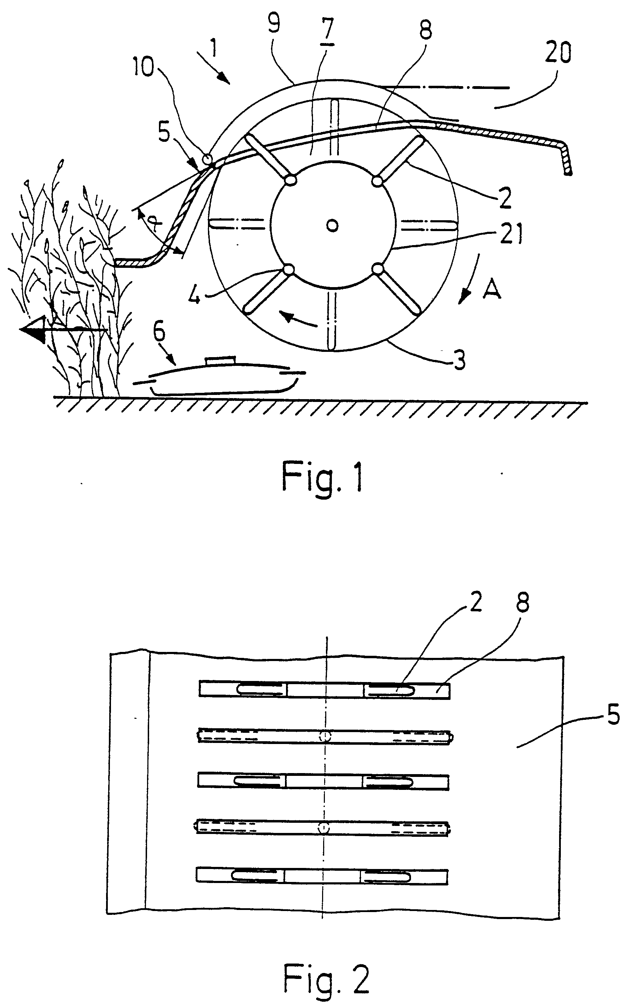

In Fig. 1 ist eine gesamthaft mit 1 bezeichnete Aufbereitungsmaschine für landwirtschaftliches Halmgut veranschaulicht. Diese Aufbereitungsmaschine weist eine mit Förderwerkzeugen 2 versehenes Förderorgan 3 auf, das in Pfeilrichtung A angetrieben wird. Ueber den Anlenkpunkten 4 der Aufbereitungswerkzeuge 2, die auch starr an einer Welle befestigt sein können, besitzt die Aufbereitungsmaschine ein Führungsorgan 5, dessen vorderes Ende bei einem vorgeschalteten Scheibenmähwerk 6 in den Bereich des noch stehenden Halmgutes reicht und dieses vorzugsweise nach vorne neigt.

Das Förderorgan 3 bildet mit dem Führungsorgan 5 einen Förderkanal 7, wobei das Förderorgan 3 das Führungsorgan 5 an dessen vorderen und hinteren Ende schneidet, derart, dass die Aufbereitungswerkzeuge 2 zumindest teilweise durch die ihnen am Führungsorgan 5 zugeordneten schlitzartigen Ausnehmungen 8 herausragen. Durch dieses Durchdringen der Aufbereitungswerkzeuge 2 verengt sich der Förderkanal 7 vorerst, wodurch erhöhte Reibung von allen Seiten auf das Halmgut einwirkt. Durch das anschliessende Divergieren des Förderkanals 7 wird das Futter wieder aufgelöst und locker am Boden abgelegt. Zur Gewährleistung eines verstopfungsfreien, kontinuierlichen Förderstromes, bilden die Tangenten an die Umlaufbahnen der Aufbereitungswerkzeuge 2 mit dem Führungsorgan 5 am vorderen Ende des Förderkanals einen spitzen Winkel α.

Zum Schutz gegen Unfälle ist über dem Führungsorgan 5, die schlitzartigen Ausnehmungen 8 überdeckend, eine Schutzhaube 9 abnehmbar angebracht. Der einfachheithalber ist dafür ein Scharnier 10 vorgesehen. Durch die Ausnehmungen 8 dringendes Halmgut kann auf diese Weise leicht entfernt werden.

Alternativ könnte die Schutzhaube an ihrem rückwärtigen Ende mit einer Oeffnung 20 versehen sein, sodass das durch die Ausnehmungen 8 aus dem Förderkanal 7 austretende Futter den Raum unter der Schutzhaube 9 verlassen kann.

In Fig. 2 ist die Anordnung der schlitzartigen Ausnehmungen am Führungsorgan 5 näher dargestellt.

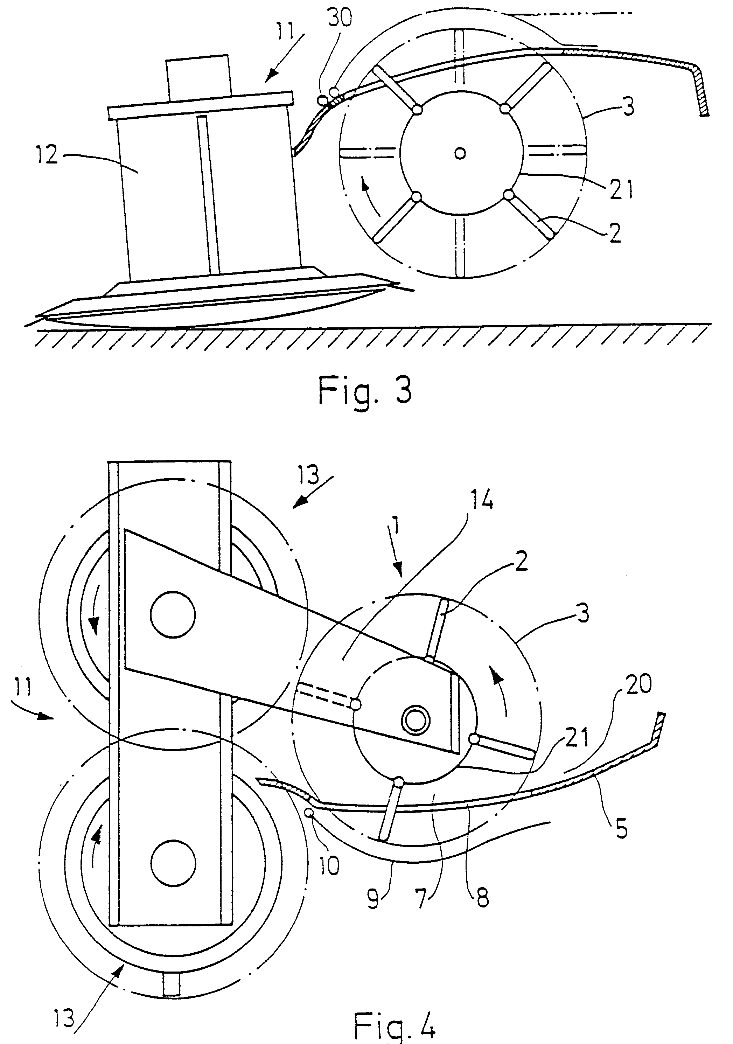

Fig. 3 zeigt eine Mähaufbereitungsmaschine mit einem vorgeschalteten Trommelmähwerk 11. Das Förderorgan 3 ist aufgrund der den Mähorganen aufgesetzten Trommelkörper 12 leicht zurückversetzt, ohne dass dadurch der Futterstrom beeinträchtigt wird.

Am vorderen Ende des Führungsorgans 5 ist ein Scharnier 13 angebracht, sodass der nach hinten anschliessende Teil anhebbar ist.

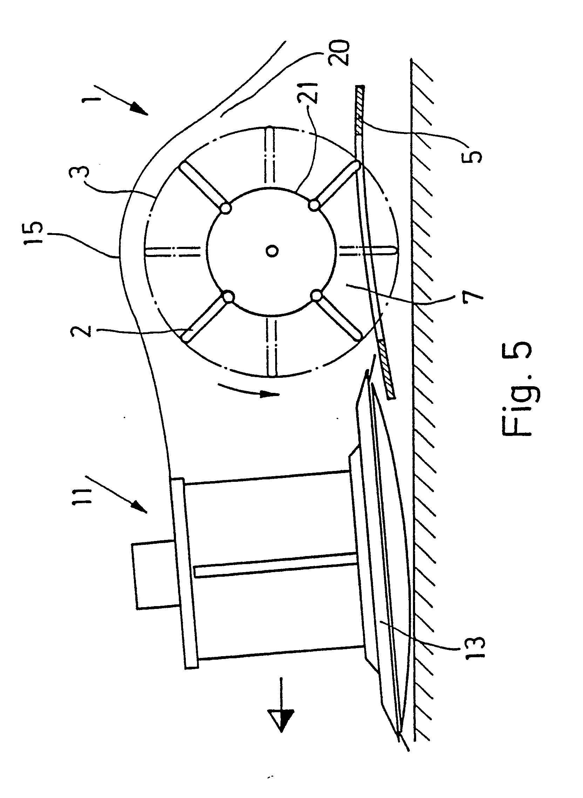

In Fig. 4 ist ·eine Mähaufbereitungseinrichtung veranschaulicht, bei welcher die Drehachse der Aufbereitungsmaschine 1 vertikal bzw. annähernd parallel zu den Rotationsachsen des Trommelmähwerks 11 angeordnet ist. Die übrigen Organe sind der Aufbereitungsmaschine 1 entsprechend Fig. 1 zugeordnet, wobei der Förderkanal 7 so angelegt ist, dass sein vorderes Ende in den Förderbereich zwischen den Mähorganen 13 mündet. Zur Befestigung der Aufbereitungsmaschine 1 ist ein mit dem Mähwerk 11 verbundener Ausleger 14 vorgesehen.

Eine Mähaufbereitungseinrichtung alternativer Ausführungsart ist in Fig. 5 gezeichnet. Die dem Trommelmähwerk 11 nachgeschaltete Aufbereitungsmaschine 1 ist mit einem unterschlächtigen Förderkanal 7 versehen. Das flache Führungsorgan 5 erstreckt sich mit seinem vorderen Ende bis zu den Mähorganen 13 und das entgegen der Fortbewegungsrichtung umlaufende Förderorgan 3 transportiert — wie in den vorangehenden Figuren dargestellt das geschnittene Halmgut durch den unterschlächtigen Förderkanal 7. Zum Schutz nach aussen ist das Förderorgan 3 von einer Haube 15 überdeckt.

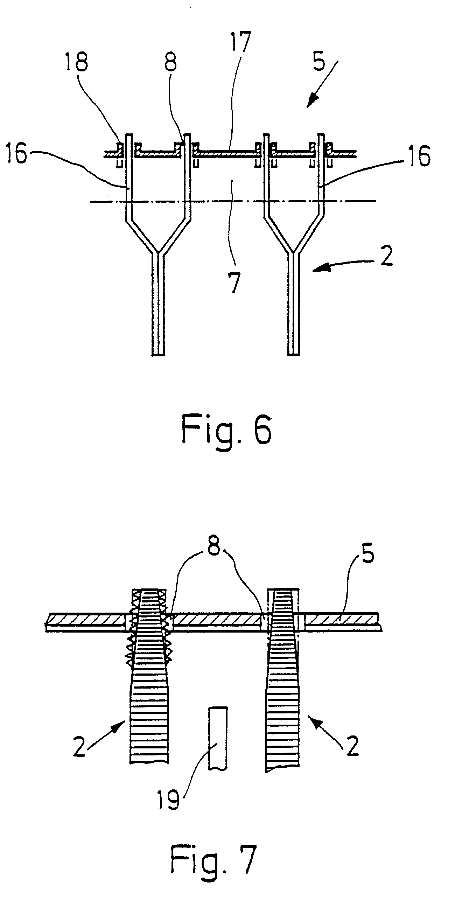

In Fig. 6 ist eine mögliche Ausführungsform der Aufbereitungswerkzeuge 2 in Zusammenwirkung mit dem Führungsorgan 5 gezeigt. Die Schenkel 16 der Y-förmigen Aufbereitungswerkzeuge ragen durch die Ausnehmungen 8 des Führungsorgans 5 nach aussen. Die strichpunktierte Linie zeigt die unterste Stellung des Führungsorganes 5 an. Die durch die Ausnehmungen 8 gebildeten Leisten 17 weisen Verstärkungsrippen 18 auf, um den sich durch die Verengung des Förderkanals 7 bildenden erhöhten Druckes aufnehmen zu können. Diese Verstärkungsrippen 18 können sowohl an der Innen- als auch Aussenseite der Leisten 17 vorgesehen sein und erstrecken sich in deren Längsrichtung.

Fig. 7 stellt weitere Ausführungsformen der Aufbereitungswerkzeuge 2 dar. Gemäss der strichpunktierten Linie sind sie prismatisch ausgebildet, können jedoch nach aussen hin konisch verjüngt ausgebildet sein. Im zweiten Falle wären die Ausnehmungen 8 so vorzusehen, dass bei grösster Eintauchtiefe die Aufbereitungswerkzeuge 2 seitlich nicht berühren. Durch die konischen Enden der Aufbereitungswerkzeuge 2 entstehen unter dem Druck des Führungsorgans 5 höhere Reibungskräfte auf das Halmgut, wobei dieser Effekt mit der Verbesserung des Reibungskoeffizienten, durch Rauheit, begünstigt werden kann.

Das Schürfen des Halmgutes wird durch eine rauhe Oberfläche an der Führungsorgan-Innenseite intensiviert. Ebenso wenn die förderwirksamen Oberflächen der Aufbereitungswerkzeuge 2 rauh, beispielsweise mit Ueberzähnen, ausgebildet sind.

Zur Begünstigung der Futteraufnahme durch das Förderorgan, können zwischen den Aufbereitungswerkzeugen 2 Mitnehmer 19 vorgesehen werden, welche das vom Mähwerk nach hinten strömende Futter hilfsweise auffangen und aufgrund der Zentrifugalkraftwirkung auf die äusseren Umlaufbahnen der Aufbereitungswerkzeuge 2 leiten. Die Mitnehmer 19 sind jedoch erheblich kürzer ausgebildet, sodass sie bei tiefster Eintauchtiefe der Aufbereitungswerkzeuge 2 in die Ausnehmungen 8 das Führungsorgan nicht berühren.

Bei Betrachtung der Fig. 1 und 3-5 wäre es denkbar, dass innerhalb des Förderorgans 3, konzentrisch zur Drehachse letzterens, eine Leittrommel 21 vorgesehen ist. Die Aufbereitungswerkzeuge 2 könnten dann am Mantel dieser Leittrommel 21 befestigt sein.

## Patentansprüche

1. Aufbereitungsmaschine für landwirtschaftliches Halmgut, bestehend aus einem rotierend antreibbaren, mit förderwirksamen Aufbereitungswerkzeugen (2) ausgebildeten Förderorgan (3) und einem mit diesem einen Förderkanal (7) bildenden Führungsorgan (5), dadurch gekennzeichnet, dass das mit einem die Drehachse des Förderorgans (3) trommelförmig umgebenden Leitorgan (21) einen Förderkanal bildende Führungsorgan (5) mit schlitzartigen Ausnehmungen (8) ausgebildet ist, derart, dass die Umlaufbahnen der Aufbereitungswerkzeuge (2) das Führungsorgan (5) an dem vorderen und dem hinteren Ende des Förderkanals schneiden.

2. Maschine nach Anspruch 1, dadurch gekennzeichnet, dass am vorderen Ende des Förderkanals (7) die Tangenten an die Umlaufbahnen der Aufbereitungswerkzeuge (2) mit dem Führungsorgan (5) einen spitzen Winkel bilden.

3. Maschine nach Anspruch 1, dadurch gekennzeichnet, dass dieser ein Mähwerk (6, 11) vorgeschaltet ist.

4. Maschine nach Anspruch 1, dadurch gekennzeichnet, dass die Aufbereitungswerkzeuge (2) an ihrer förderwirksamen Seite eine rauhe, das Halmgut verletzende Oberfläche aufweisen.

5. Maschine nach Anspruch 1, dadurch gekennzeichnet, dass die Aufbereitungswerkzeuge (2) mit nach aussen sich verjüngenden Flanken versehen sind.

6. Maschine nach Anspruch 5, dadurch gekennzeichnet, dass die Flanken der Aufbereitungswerkzeuge (2) eine rauhe Oberfläche aufweisen.

7. Maschine nach Anspruch 1, dadurch gekennzeichnet, dass das Führungsorgan (5) zur wahlweisen Aenderung der Förderkanalhöhe bzw. unwirksam verstellbar angeordnet ist.

8. Maschine nach Anspruch 1, dadurch gekennzeichnet, dass das Führungsorgan (5) abnehmbar befestigt ist.

9. Maschine nach Anspruch 1, dadurch gekennzeichnet, dass das Führungsorgan (5) scharnierend angeordnet ist.

10. Maschine nach Anspruch 1, dadurch gekennzeicht, dass das Führungsorgan (5) mit einer die Ausnehmungen (8) abdeckenden Haube (15) versehen ist.

11. Maschine nach Anspruch 10, dadurch gekennzeichnet, dass die Haube (15) an ihrem hinteren Ende mit einer Austrittsöffnung (20) versehen ist.

12. Maschine nach Anspruch 1, dadurch gekennzeichnet, dass zwischen den Aufbereitungswerkzeugen (2) in den Förderkanal (7) ragende Mitnehmer (19) vorgesehen sind.

13. Maschine nach Anspruch 1, dadurch gekennzeichnet, dass der durch Förderorgan (3) und Führungsorgan (5) gebildete Förderkanal (7) unterschlächtig angeordnet ist.

14. Maschine mit einem vorgeschalteten Trommelmähwerk nach Anspruch 1 und 3, dadurch gekennzeichnet, dass das Förderorgan (3) um eine annähernd vertikale Drehachse angeordnet ist, derart, dass das vordere Ende des Förderkanals (7) zwischen die Trommeln des Mähwerks (6, 11) gerichtet ist.

15. Maschine nach Anspruch 1, dadurch gekennzeichnet, dass die Aufbereitungswerkzeuge (2) am Mantel einer Leittrommel (21) angeordnet sind.

## Claims

1. A conditioning machine for agricultural stalk material, consisting of a conveyor member (3) which can be driven in rotation and is formed with conditioning tools (2) having a conveying action, and of a guide member (5) forming a conveying channel (7) with the conveyor member, characterised in that the guide member (5) forming a conveying channel with a guiding member (21) surrounding the axis of rotation of the conveyor member (3) in the form of a drum is formed with slitlike openings (8) in such a manner that the rotational paths of the conditioning tools (2) intersect the guide member (5) at the front and at the rear end of the conveying channel.

2. A machine according to Claim 1, characterised in that, at the front end of the conveying channel (7), the tangents on the rotational paths of the conditioning tools (2) form an acute angle with the guide member (5).

3. A machine according to Claim 1, characterised in that a mower (6, 11) is connected in front of it.

4. A machine according to Claim 1, characterised in that the conditioning tools (2) comprise, at their side having a conveying action, a rough surface which damages the stalk material.

5. A machine according to Claim 1, characterised in that the conditioning tools (2) are provided with flanks which become narrower towards the outside.

6. A machine according to Claim 5, characterised in that the flanks of the conditioning tools (2) have a rough surface.

7. A machine according to Claim 1, characterised in that the guide member (5) is made adjustable for the selective alteration of the height of the conveying channel or so as to be inoperative.

8. A machine according to Claim 1, characterised in that the guide member (5) is removably attached.

9. A machine according to Claim 1, characterised in that the guide member (5) is made hinged.

10. A machine according to Claim 1, characterised in that the guide member (5) is provided with a hood (15) covering the openings (8).

11. A machine according to Claim 10, characterised in that the hood (15) is provided with an outlet (20) at its rear end.

12. A machine according to Claim 1, characterised in that entrainment means (19) projecting into the conveying channel (7) are provided between the conditioning tools (2).

13. A machine according to Claim 1, characterised in that the conveying channel (7) formed by conveyor member (3) and guide member (5) is adapted to be undershot.

14. A machine having a rotary drum mower connected in front according to Claims 1 and 3, characterised in that the conveyor member (3) is arranged round a substantially vertical axis of rotation in such a manner that the front end of the conveying channel (7) is directed between the drums of the mower (6, 11).

15. A machine according to Claim 1, characterised in that the conditioning tools (2) are disposed on the peripheral surface of a guiding drum (21).

## Revendications

1. Machine agricole pour la préparation de fourrage, composée d'un organe de déplacement (3) qui peut être entraîné en rotation et qui comporte des outils de préparation (2) agissant dans le sens d'un déplacement, et d'un organe de guidage (5) constituant avec lui un canal de déplacement (7), caractérisée par le fait que l'organe de guidage (5) qui constitue un canal de déplacement avec un organe directeur (21) entourant en forme de tambour l'axe de rotation de l'organe de déplacement (3), présente des évidements en forme de fentes (8), de telle sorte que les trajectoires circulaires des outils de préparation (2) recoupent l'organe de guidage (5) aux extrémités avant et arrière du canal de déplacement.

2. Machine selon la revendication 1, caractérisée par le fait qu'à l'extrémité avant du canal de déplacement (7), les tangentes aux trajectoires circulaires des outils de préparation (2) forment un angle aigu avec l'organe de guidage (5).

3. Machine selon la revendication 1, caractérisée par le fait qu'une faucheuse (6, 11) est montée devant elle.

4. Machine selon la revendication 1, caractérisée par le fait que les outils de préparation (2) présentent, sur leur côté qui agit dans le sens du déplacement, une surface rugueuse qui déchiquette le fourrage.

5. Machine selon la revendication 1, caractérisée par le fait que les outils de préparation (2) sont munis de flancs qui se rétrécissent vers l'extérieur.

6. Machine selon la revendication 5, caractérisée par le fait que les flancs des outils de préparation (2) présentent une surface rugueuse.

7. Machine selon la revendication 1, caractérisée par le fait que l'organe de guidage (5) est monté de manière à pouvoir être déplacé afin de pouvoir modifier à volonté la hauteur du canal de déplacement ou, respectivement, le rendre inactif.

8. Machine selon la revendication 1, caractérisée par le fait que l'organe de guidage (5) est fixé de manière à pouvoir être enlevé.

9. Machine selon la revendication 1, caractérisée par le fait que l'organe de guidage (5) est monté sur charnières.

10. Machine selon la revendication 1, caractérisée par le fait que l'organe de guidage (5) est muni d'un capot (15) qui recouvre les évidements (8).

11. Machine selon la revendication 10, caractérisée par le fait que le capot (15) est muni à son extrémité arrière d'une ouverture de sortie (20).

12. Machine selon la revendication 1, caractérisée par le fait que des taquets d'entraînement (19) qui font saillie dans le canal de déplacement (7) sont prévus entre les outils de préparation (2).

13. Machine selon la revendication 1, caractérisée par le fait que le canal de déplacement (7) formé par l'organe de déplacement (3) et l'organe de guidage (5) est disposé sous l'axe de rotation.

14. Machine selon la revendication 1 et 3, comprenant en amont une faucheuse à tambours, et caractérisée par le fait que l'organe de déplacement (3) est disposé autour d'un axe de rotation approximativement vertical, de telle sorte que l'extrémité avant du canal de déplacement (7) soit dirigée entre les tambours de la faucheuse (6, 11).

15. Machine selon la revendication 1, caractérisée par le fait que les outils de préparation (2) sont disposés sur l'enveloppe d'un tambour conducteur (21).

Fig. 1

Fig. 2

Fig. 3

Fig. 4

Fig. 5

EP 0 139 821 B1

Fig. 6

Fig. 7